# DEMANDE DE BREVET EUROPEEN

(11) **EP 1 748 358 A1**
(43) Date de publication de la demande: **31.01.2007**
(21) Numéro de dépôt: 06116668.2
(22) Date de dépôt: 05.07.2006
(51) Int. Cl.: G06F 7/58

(54) **Génération de nombres de façon non déterministe**

(30) Priorité: 05.07.2005 FR 0552046
(71) Demandeur: ST MICROELECTRONICS S.A., 92120 Montrouge (FR)
(72) Inventeur: Teglia, Yannick, 13011 Marseille (FR); Liardet, Pierre-Yvan, 13790 Peynier (FR)
(74) Mandataire: de Beaumont, Michel

(57) **Abrégé**

L'invention concerne un procédé de détermination de l'entropie d'une source de bruit (2) fournissant un flux de bits (BS), un procédé et dispositif de génération d'un flux de bits consistant à paralléliser le flux de bits pour obtenir des premiers mots sur un premier nombre (n1) de bits, appliquer aux mots successifs une fonction (2) de compression, et évaluer (7) un deuxième nombre (n2) de bits sur lequel ladite fonction de compression fournit ses résultats, le deuxième nombre représentant le nombre de bits utiles dans les premiers mots.

## Description

### Domaine de l'invention

La présente invention concerne de façon générale la génération non déterministe de nombres et plus particulièrement le traitement d'un flux de bits fourni par une source de bruit non déterministe (souhaitée aléatoire).

L'invention s'applique par exemple à la génération non déterministe de quantités numériques destinées à constituer des clés de chiffrement ou d'authentification utilisées dans des fonctions cryptographiques.

### Exposé de l'art antérieur

La génération d'un flux de bits pour constituer de façon non déterministe des quantités numériques fait appel à une source de bruit susceptible de fournir, directement ou après conversion, un flux d'états binaires. La source de bruit peut être numérique ou analogique et exploiter diverses perturbations (bruit thermique, variation de fréquence, d'oscillateur, etc.). Le flux de bits est généralement exploité par mots de taille (nombre de bits) fixe. La distribution de séquences de bits qui caractérise la qualité du générateur du point de vue du caractère aléatoire est évaluée en tenant compte de la taille des mots souhaitée.

Il est fréquent de chercher à améliorer le caractère aléatoire d'un flux de bits en le soumettant à des traitements en aval de la source de bruit. C'est le cas, par exemple, des dispositifs appelés débiaiseurs.

Cependant, un autre problème qui touche la génération de nombres, notamment pour constituer des clés d'authentification ou de chiffrement concerne l'entropie du flux de bits, c'est-à-dire la quantité d'informations utiles transportée par rapport au nombre de bits transmis. On peut comprendre ce phénomène en considérant un mot de 64 bits formé par la répétition de 8 octets identiques dont les combinaisons de bits sont équiprobables. L'information utile ne comporte alors que 8 bits, les autres bits du mot de 64 bits ne portant pas d'information qui ne soit pas redondante. L'entropie est alors d'un huitième par rapport à une entropie maximale (1).

Par exemple, un générateur de quantités numériques pour constituer une clé de chiffrement ou d'authentification sur 1024 bits ne peut pas être considéré comme fournissant effectivement des clés sur 1024 bits si la représentation de ces clés n'est pas optimale du point de vue de l'entropie, c'est-à-dire si certains bits ne contiennent pas d'information utile. L'entropie est calculée en fonction de la taille des mots pris en compte par rapport à la répétition possible de séquences de tailles inférieures dans le flux généré de façon non déterministe. En supposant que chaque octet n'a en fait qu'un bit d'entropie (entropie d'un huitième), cela revient à dire que la clé sur 1024 bits est équivalente à une clé sur 128 bits.

Pour qualifier un générateur de nombres aléatoires, on effectue classiquement des tests statistiques d'entropie en examinant les résultats a posteriori afin de déterminer le nombre de bits porteurs d'information par mot.

Un exemple d'une telle méthode de test est décrit dans l'article "On the Security of Random Sources" de J-S. Coron publié en 1999 dans H. Imai and Y. Zheng (Eds.) : PKC'99, LNCS 1560, pp 29-42 (Springer-Verlag).

Un inconvénient de ces solutions statistiques est qu'elles requièrent des calculs importants et longs. En fait, ces tests sont effectués lors de la caractérisation du générateur non déterministe en raison du nombre d'échantillons requis (plusieurs millions). Il n'est pas envisageable d'intégrer de tels mécanismes dans le produit fabriqué, par exemple, pour des évaluations périodiques pendant la vie du produit.

### Résumé de l'invention

La présente invention vise à pallier tout ou partie des inconvénients des mécanismes de test d'entropie de flux de bits générés électroniquement.

L'invention vise plus particulièrement à vérifier en temps réel la qualité du flux de bits généré du point de vue de son entropie.

L'invention vise également à proposer un générateur de mots de bits issus d'une source non déterministe dont tous les bits portent une information utile.

Pour atteindre tout ou partie de ces objets ainsi que d'autres, la présente invention prévoit un procédé de détermination de l'entropie d'une source de bruit fournissant un flux de bits, comportant les étapes de :
paralléliser le flux de bits pour obtenir des premiers mots sur un premier nombre de bits ;
appliquer aux mots successifs une fonction de compression ; et
évaluer un deuxième nombre de bits sur lequel ladite fonction de compression fournit ses résultats, le deuxième nombre représentant le nombre de bits utiles dans les premiers mots.

Selon un mode de mise en oeuvre de la présente invention, la fonction de compression est une fonction de Huffman.

L'invention prévoit également un procédé de génération non déterministe de mots à partir d'une source de bruit fournissant un flux de bits, comportant les étapes de :
paralléliser le flux de bits fourni par la source de bruit pour obtenir des premiers mots sur un premier nombre de bits ;
appliquer en parallèle audits premiers mots une fonction de compression fournissant des deuxièmes mots sur un deuxième nombre de bits et une fonction de diffusion/confusion fournissant des troisièmes mots sur un troisième nombre de bits ; et
sélectionner un nombre de bits égal au deuxième nombre dans les troisièmes mots.

Selon un mode de mise en oeuvre de la présente invention, la fonction de diffusion/confusion est une fonction de condensat, de préférence choisie parmi les fonctions SHA1 et MD5.

Selon un mode de mise en oeuvre de la présente invention, la fonction de diffusion/confusion est un algorithme de chiffrement, de préférence, de type DES.

L'invention prévoit également un générateur non déterministe de nombres à partir d'une source de bruit fournissant un flux de bits, comportant :
une fonction de compression de premiers mots sur un premier nombre de bits obtenus à partir de la source de bruit, fournissant des deuxièmes mots sur un deuxième nombre de bits ;
une fonction de diffusion/confusion desdits premiers mots ; et
un sélecteur d'un nombre de bits égal au deuxième nombre dans des mots résultant de la fonction de diffusion/confusion.
Selon un mode de réalisation de la présente invention, la fonction de diffusion/confusion est une fonction de condensat, de préférence choisie parmi par les fonctions SHA1 et MD5.

Selon un mode de réalisation de la présente invention, la fonction de diffusion/confusion est une fonction de chiffrement, de préférence de type DES.

Selon un mode de réalisation de la présente invention, la fonction de compression est une fonction de Huffman.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique et sous forme de blocs, un mode de réalisation d'un procédé de détermination de l'entropie d'un flux de bits selon la présente invention ; et
la figure 2 représente, de façon très schématique et sous forme de blocs, un mode de réalisation d'un générateur non déterministe de mots binaires selon la présente invention.

Les mêmes éléments ont été désignés par les mêmes références aux différentes figures. Pour des raisons de clarté, seuls les étapes et éléments qui sont utiles à la compréhension de l'invention ont été représentés aux figures et seront décrits par la suite. En particulier, la constitution de la source de bruit fournissant le flux de bits initial testé ou traité par l'invention n'a pas été détaillée, l'invention étant compatible avec toute source de bruit classique fournissant un flux de bits. De même, l'exploitation faite des mots numériques générés par l'invention n'a pas été détaillée, celle-ci étant là encore compatible avec toute exploitation classique de quantités numériques générées de façon non déterministe.

### Description détaillée

Une caractéristique d'un mode de réalisation de la présente invention est d'utiliser une fonction de compression pour estimer le nombre de bits utiles fournis par une source de bits non déterministe. Selon l'invention, la fonction de compression est utilisée pour déterminer le rapport entre le nombre de bits utiles sur le nombre de bits d'entrée et pas pour fournir des bits, contrairement à l'utilisation habituelle d'une telle fonction de compression.

Une fonction de compression se caractérise par le fait que plus une donnée est représentée dans un ensemble de données, moins la fonction a besoin de place (de bits) pour la représenter. A l'inverse, plus une donnée est rare, plus on utilise de place (de bits). On voit donc qu'appliqué à un ensemble de mots binaires, plus le nombre de mots se répétant est important, plus le nombre de bits requis pour représenter ces mots (distinguer les mots les uns des autres) est faible.

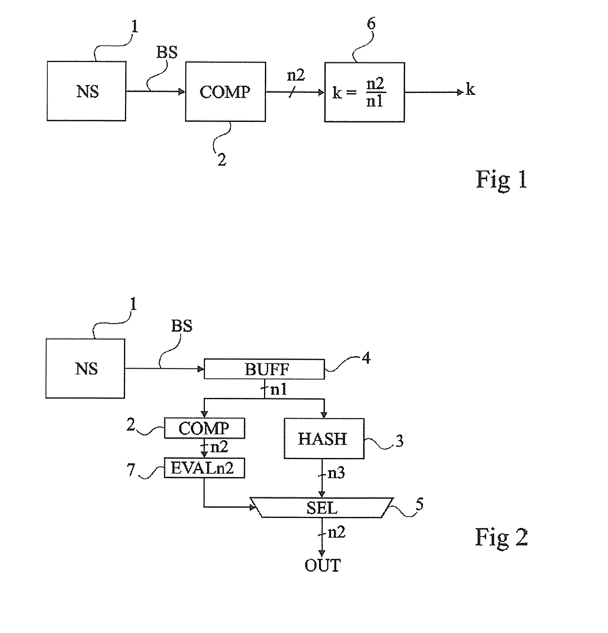

La figure 1 représente de façon très schématique et sous forme de blocs, un mode de mise en oeuvre du procédé d'estimation de l'entropie d'un flux de bits BS fourni par une source de bruit 1 (NS). Une fonction 2 de compression (COMP) fournit des mots sur n2 bits à partir de mots de n1 bits construits depuis le flux de bits BS. Une fonction 6 (matérielle ou logicielle) calcule le rapport k entre les nombre n2 et n1, après avoir évalué le nombre n2 (et le cas échéant le nombre n1).

En appliquant la fonction de compression 2 à un ensemble de plusieurs mots de n1 bits dérivés de la source de bruit 1, on obtient un ensemble de mots sur n2 bits avec n2 inférieur ou égal à n1. Le rapport n2/n1 détermine le rapport k de la fonction de compression. En fait, le nombre n2 représente le nombre de bits à prendre dans les mots de n1 bits pour n'obtenir que des bits utiles.

Ainsi, l'invention utilise le nombre k pour déterminer l'entropie du flux de bits fourni par la source de bruit 1, comme étant égale au rapport de la fonction de compression.

Le nombre de mots à prendre en compte dépend de la taille (n1) des mots d'entrée. Plus le nombre de mots de l'ensemble est grand, plus le résultat est fiable et plus n1 est grand, plus le nombre de mots de l'ensemble doit être grand. Par 2n1 exemple, l'ensemble de mots comporte au moins 2 mots.

A titre d'exemple, on pourra utiliser une fonction de compression de Huffman telle que décrite dans "A Method for the Construction of Minimum-Redundancy Codes", parue dans proceedings of the I.R.E., 40, en septembre 1952.

Selon un autre exemple, on pourra utiliser une fonction de compression décrite dans "Arithmetic Coding + Statistical Modeling = Data Compression", Part 1 ― Arithmetic Coding de Mark Nelson, publié dans "Dr. Dobb's Journal" en février 1991.

Selon un premier mode de mise en oeuvre, le procédé de l'invention est utilisé pour caractériser l'entropie d'un générateur non déterministe. Plus le nombre k est important, meilleure est la qualité en terme de caractère non déterministe du générateur, donc plus la source de bruit est efficace pour générer des mots de façon non déterministe.

Selon un autre mode de mise en oeuvre, le procédé illustré en relation avec la figure 1 est utilisé pour, à partir d'une source de bruit fournissant un flux de bits, générer des mots constituants des quantités de chiffrement ou d'authentification.

La figure 2 représente, de façon schématique et sous forme de blocs, un mode de réalisation d'un générateur non déterministe de nombres selon la présente invention exploitant le procédé de qualification illustré par la figure 1 pour sélectionner, dans le flux de bits généré, un nombre de bits correspondant au nombre de bits utiles.

Comme dans le cas de la figure 1, le flux de bits issu de la source de bruit 1 est traité par mots de n1 bits. En figure 2, on suppose un élément de mémorisation temporaire 4 (BUFF), par exemple des registres servant à paralléliser sur n1 bits le flux BS et à stocker un ensemble de mots (en figure 1, cette fonction est supposée être incluse dans le bloc 2).

Les mots de n1 bits sont soumis en parallèle à une fonction de compression 2 du type de celle décrite en relation avec la figure 1 fournissant des mots sur n2 bits et à une fonction de diffusion/confusion, par exemple une fonction de condensat 3 (hash function), qui brasse les n1 bits et fournit des mots sur n3 bits avec n3 inférieur ou égal à n1. Une fonction de condensat se caractérise par le fait que connaissant la donnée résultante, il est difficile de remonter à la donnée d'entrée et par le fait qu'elle est dépourvue de collision, c'est-à-dire qu'il est impossible de trouver deux données fournissant le même résultat.

En variante, les fonctions 2 et/ou 3 manipulent le flux de bits série BS et se chargent d'obtenir les mots sur n2 et n3 bits. Selon une autre variante, la source de bruit 1 fournit des mots de n1 bits.

N'importe quelle fonction de condensat pourra être utilisée, par exemple, les fonctions connues sous les dénominations SHA1 et MD5. En variante, un algorithme de cryptographie de type DES (Data Encryption Standard) peut également être utilisé pour mélanger les bits dans la fonction 3.

Selon ce mode de réalisation de l'invention, le nombre n2 de bits en sortie de la fonction de compression 2 est évalué (bloc 7, EVAL n2) et sert à sélectionner (bloc 5, SEL) n2 bits dans les mots de n3 bits fournis par la fonction de condensat. Il en résulte que les mots sur n2 bits fournis par le sélecteur 5 ne contiennent que des bits utiles (porteurs d'information). Ces mots sont alors exploités comme quantités numériques en fonction de l'application. On notera que le contenu des mots fourni par la fonction 2 n'est pas exploité, seul le nombre de bits de ces mots est utilisé.

En variante, l'exploitation du nombre n2 (directement ou après calcul du rapport k, figure 1) peut prendre différente formes. On peut, par exemple, comparer le nombre n2 à une plage de valeurs acceptables. On peut également comparer le nombre n2 courant par rapport à la valeur précédente (ou à plusieurs valeurs). On peut également utiliser directement le nombre n2 pour adapter en temps réel le nombre de bits fournis, etc.

Un avantage de la présente invention est qu'elle permet de tester l'entropie d'un générateur non déterministe en requérant moins de ressources de calcul que les solutions classiques.

Un autre avantage de la présente invention est que le test peut être intégré avec le circuit générant de façon non déterministe les mots exploités par l'application.

Un autre avantage de l'invention est qu'elle permet d'optimiser l'entropie par bit en exploitant le résultat de la fonction de compression pour sélectionner les bits utiles dans des mots fournis par une fonction de condensat alimentée par les bits de la source de bruit.

Un autre avantage de la présente invention est qu'elle permet de détecter une éventuelle dérive de l'entropie d'un générateur non déterministe pendant la vie du produit. Cette détection peut être exploitée soit pour avertir l'utilisateur, soit pour asservir en temps réel le nombre de bits des mots générés.

Bien entendu, la présente invention est susceptible de diverses variantes et modifications qui apparaîtront à l'homme de l'art. En particulier, la sélection du nombre de bits exploités par le générateur de l'invention dépend de l'application et notamment du nombre de bits souhaités pour les mots générés de façon non déterministe. En outre, la mise en oeuvre de l'invention, que ce soit par des moyens matériels ou logiciels, est à la portée à l'homme du métier à partir des indications fonctionnelles données ci-dessus.

## Revendications

1. Procédé de détermination de l'entropie d'une source de bruit (2) fournissant un flux de bits (BS), **caractérisé en ce qu'**il comporte les étapes de :
paralléliser le flux de bits pour obtenir des premiers mots sur un premier nombre (n1) de bits ;
appliquer aux mots successifs une fonction (2) de compression ; et
évaluer (6, 7) un deuxième nombre (n2) de bits sur lequel ladite fonction de compression fournit ses résultats, le deuxième nombre représentant le nombre de bits utiles dans les premiers mots.

2. Procédé selon la revendication 1, dans lequel la fonction de compression (2) est une fonction de Huffman.

3. Procédé de génération non déterministe de mots à partir d'une source de bruit (1) fournissant un flux de bits (BS), **caractérisé en ce qu'**il comporte les étapes de :
paralléliser le flux de bits fourni par la source de bruit pour obtenir des premiers mots sur un premier nombre (n1) de bits ;
appliquer en parallèle audits premiers mots une fonction de compression (2) fournissant des deuxièmes mots sur un deuxième nombre (n2) de bits et une fonction de diffusion/confusion (3) fournissant des troisièmes mots sur un troisième nombre (n3) de bits ; et
sélectionner (5) un nombre de bits égal au deuxième nombre dans les troisièmes mots.

4. Procédé selon la revendication 3, dans lequel la fonction de diffusion/confusion (3) est une fonction de condensat, de préférence choisie parmi les fonctions SHA1 et MD5.

5. Procédé selon la revendication 3, dans lequel la fonction de diffusion/confusion est un algorithme de chiffrement, de préférence, de type DES.

6. Générateur non déterministe de nombres à partir d'une source de bruit (1) fournissant un flux (BS) de bits, **caractérisé en ce qu'**il comporte :
une fonction de compression (2) de premiers mots sur un premier nombre (n1) de bits issus de la source de bruit, fournissant des deuxièmes mots sur un deuxième nombre (n2) de bits ;
une fonction de diffusion/confusion (3) desdits premiers mots ; et
un sélecteur (5) d'un nombre (n2) de bits égal au deuxième nombre dans des mots résultant de la fonction de diffusion/confusion.

7. Générateur selon la revendication 6, dans lequel la fonction de diffusion/confusion (3) est une fonction de condensat, de préférence choisie parmi par les fonctions SHA1 et MD5.

8. Générateur selon la revendication 6, dans lequel la fonction de diffusion/confusion est une fonction de chiffrement, de préférence de type DES.

9. Générateur selon l'une quelconque des revendications 6 à 8, dans lequel la fonction de compression (2) est une fonction de Huffman.
